# EUROPEAN PATENT SPECIFICATION

(11) **EP 3 247 118 B1**
(45) Date of publication and mention of the grant of the patent: **03.10.2018**
(21) Application number: 16170025.7
(22) Date of filing: 17.05.2016
(51) Int. Cl.: H04N 21/23, H04N 21/43

(54) **AN AUTOMATED DATA STREAM SELECTION SYSTEM AND METHOD**
SYSTEM UND VERFAHREN ZUR AUTOMATISIERTEN DATENSTROMAUSWAHL
SYSTÈME DE SÉLECTION DE FLUX DE DONNÉES AUTOMATISÉE ET PROCÉDÉ

(43) Date of publication of application: 22.11.2017
(73) Proprietor: IG Knowhow Limited, London EC4R 2YA (GB)
(72) Inventor: LEVINE, Boris, London, EC4R 2YA (GB); CLOKE, Jamie Roland, London, EC4R 2YA (GB)
(74) Representative: Ahmad, Sheikh Shakeel

(56) References cited:
- EP-A1- 2 902 924
- EP-A2- 2 750 405
- WO-A1-2015/186945
- WO-A2-2008/023352
- US-A1- 2016 080 173

## Description

### TECHNICAL FIELD

The present invention concerns an automated data stream selection system and method, and more particularly but not exclusively, to a system and method for processing data streams efficiently so as to determine and select the data stream comprising the best set of real-time parameters representing an event.

### BACKGROUND

There is a need for accurate real-time reporting of information regarding activity (namely a series of events) that occurs in relation to a specific entity or object. The information for each discrete event that occurs is represented by a set of parameters which vary in real-time according to the specific details of that event and that specific entity or object. Each set of parameters uniquely identifies and describes any event that occurs in relation to a particular entity or object. For example, one of the set of parameters may be a timestamp of the time at which that event occurred. Another one of the set of parameters may be the amount of movement of the entity from a known reference point. There are many different types of parameters that can be reported on to describe the event.

The parameterisation of activity in relation to the object/entity is advantageous because the parameters can be transmitted with minimal use of bandwidth (for example compared to a video stream for example) and because subsequent processing of parameters is far easier than raw data (for example a raw video stream). Furthermore, restricting the reporting to events means that real-time continuous reporting over periods of time where there is no activity in relation to the object/entity is not required, and thereby uses no bandwidth.

This real-time reporting of activity in relation to the object/entity enables subsequent remotely-located processors, to which the activity is reported, to process the information and take some subsequent action.

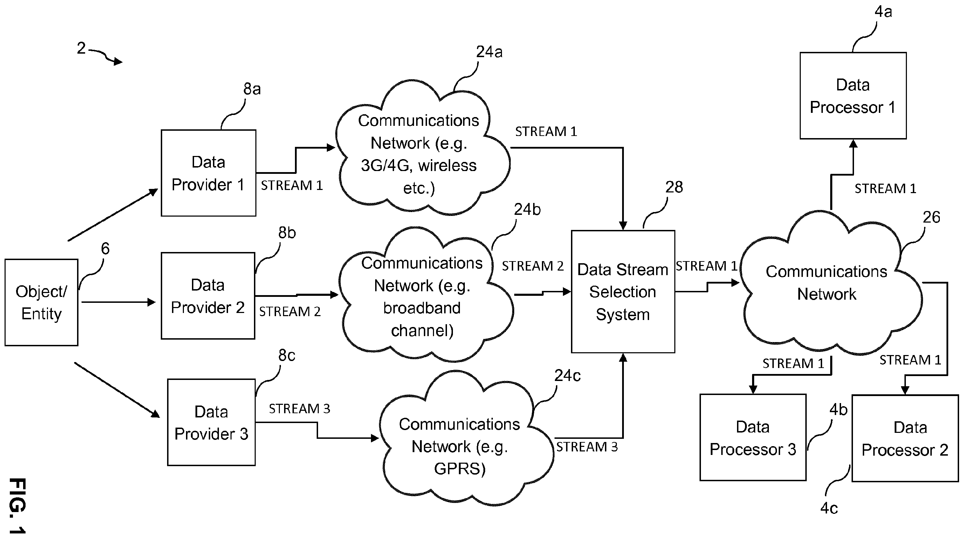

A system for generating and reporting the above-mentioned information about activity relating to a particular entity is known. An overview of such a system and its connection to remotely-located data processors is illustrated in **Figure** 1 and is described below.

Referring to Figure 1, the system 2 is designed to monitor and provide information to remote processors 4 to take actions in relation to an object/entity 6. The object/entity 6 is monitored by a plurality of data providers 8a, 8b, 8c. Each data provider comprises a processing module and a communications module (not shown) which is common to or local to the entity/object 6 that is being monitored. Each data provider 8 is configured to continuously monitor the entity/object 6 so as to ascertain its status at different points in time. The monitoring is continuous but the reporting is activity (event)-based.

As a result of the constant monitoring by the data providers 8, an event which occurs in respect of the entity 6 is quickly detected by the data providers 8a, 8b, 8c. Each data provider 8a, 8b, 8c is further configured to generate and output a data stream containing information (one or more records each including a set of parameters) relating to and uniquely characterising that event. Because each data provider is different to, and independent of other data providers, the format of the output data stream of one data provider can be different to that of another data provider. The data stream provided by each data provider 8a, 8b, 8c corresponds to a continuous stream of data records (or data packets) over time and an example of the data structure of one of the records in a data stream may be seen in **Figure** 2. Subsequently, throughout this document, the terms 'data record' and 'data packet' will be used interchangeably to refer to one of the many pieces of data that make up a data stream provided by each data provider, each piece of data created in response to an event occurring for an entity.

Each data record 10 comprises the following information: (a) an ID or identifier 12 which identifies the specific entity/object to which the information within the data stream relates; (b) current data 14 comprising a first set of time-varying parameters (numbered 1, 2, 3...) that relate to properties of a specific current event that has occurred for that entity/object; (c) historical data 16 comprising a second set of parameters (labelled a, b, c...) relating to information that is known to the data provider (for example, this may include parameters that characterise one or more previous events that have occurred for that entity over a certain period of time); (d) a remote timestamp 18 applied by the data provider which indicates the time that the data was obtained; (e) location data 20 comprising information relating to the location or identity of the data provider which produced the data stream; and (f) other event data 22 which may comprise any other information relating to the current event.

Returning to **Figure 1**, the data stream generated by each data provider 8 is transmitted via a communications network 24a, 24b, 24c to a data stream selection system 28 (located remotely from the entity 6 and data providers 8a, 8b, 8c). Each of the data providers 8a, 8b, 8c may utilise different communication channels or networks (which all have different properties) to transmit the data streams to the data stream selection system 28. For example, wireless wide area networks, satellite communications, Bluetooth communication and wired (landline) channels will all have different properties - the speed of data transmission and the network bandwidth may vary between the different channels/networks. Each communications channel 24a, 24b, 24c may therefore transmit data streams better under certain circumstances or conditions than others. Such inherent properties of the communications channels are out of the control of the data stream selection system, and therefore it is not possible to guarantee that a certain channel will always deliver the most accurate information (i.e. be the fastest). The data stream selection system 28 is arranged and configured to process the incoming data streams and subsequently to select the data stream which contains the most up-to-date information about the events that have occurred to the entity and therefore best represents the current state of the entity (i.e. corresponds to the most reliable data stream). Furthermore, the format and the size of the information payload of the data records (e.g. parameters and data fields) that make up each data stream are pre-determined by the data provider that is generating that particular data stream. Such properties of the received data records are therefore also out of the control of the data stream selection system, making it difficult for the data stream selection system to provide a standardised output data stream to the data processors.

A common method used by existing systems to identify the most reliable data provider is the use of historical data (typically stored within the data stream selection system itself). This historical data indicates how reliable each data stream has proved to have been in the past, and therefore provides an indication of its current and future reliability. If the stream analyses are based on historical data, the data stream selection system may require manual reconfiguration to switch between data streams.

Once the data stream selection system 28 has determined and selected the best (most reliable) data stream, the selected data stream is transmitted via a communications network 26 to a plurality of data processors 4a, 4b, 4c. Each data processor comprises an input (not shown) for receiving the data stream, and processing capabilities (e.g. a central processor, also not shown) which carry out analysis of the data stream and extract the relevant parameters. The extracted parameters are subsequently used as inputs for decision-making processes that are carried out by the data processor 4a, 4b, 4c such that some action can be taken on the basis of the received processed data.

Although only a single entity is shown in **Figure 1**, it will be appreciated that each data provider 8a, 8b, 8c may monitor and subsequently provide information relating to multiple entities/objects (tens or hundreds of entities/objects) as part of the data stream. The single entity/object 6 shown in the figure is therefore merely representative of how the system would process the information relating to events occurring for one of the many entities, as the inclusion of additional entities into **Figure 1** would likely make the figure less clear.

In addition, multiple data providers provide data about the same entity. For example, in one non-limiting embodiment, a data provider can be a set of sensors attached to a vehicle providing real-time data about the vehicle via GPRS. Another data provider could be a smartphone (carried in the pocket of a passenger within the vehicle) which provides data relating to the movement of the vehicle via wireless or 3G/4G data channels. A third data provider could be a set of sensors external to the vehicle, monitoring data about the movement of the vehicle and providing this via a fixed broadband communications channel. All three data providers provide valid data about the vehicle from their particular perspective. However, for a data processor relying on the movement data of the vehicle as an input into the decision-making processor (for example, a separate tracking system which relies on the input of the vehicle movement data to determine the location of the vehicle), an important issue to consider is which one of the data providers should be selected as the best data provider (i.e. the one that provides the best and most accurate set of data at any given moment in time, as well as averaged over time).

As another non-limiting example, the entity for which data is provided may be an automated aerial drone with a camera attached to or mounted on the drone. In one embodiment the camera could even be the camera of a smart phone. In this case, the data providers may be sets of sensors provided in the camera, sensors provided in or on the drone itself and a set of external sensors at a monitoring station monitoring the movement of the drone. The sensors on the drone and camera could use one of the following possible communications channels: (a) Bluetooth channels (e.g. from the camera or drone sensors to a local base station device on the ground); (b) WiFi communications channels (from the drone or camera sensors to a ground base station); data telecommunications channels (e.g. 3G/4G channels from the drone or camera sensors to a telecommunications mast); and (c) satellite communication channels (e.g. GPS from the camera or drone sensors to a communications base station). The set of external sensors could use any standard wide area data communications channel such as a fixed wire or wireless communications channels to the data stream selection system (e.g. the Internet). Each data provider in this case also provides valid data (from their perspective) regarding the movement and position of the drone to a decision-making processor, and as in the previous example, the decision-making processor may be a tracking system relying on the input of data to determine the location so as to steer the drone in an automated manner.

As in the above non-limiting examples, it should be noted that events may occur in very quick succession for the entity, resulting in a rapid variation of the parameters. In the first example, the parameters characterising a particular event (in the case of the movement of the vehicle, the parameters relating to the vehicle's instantaneous, speed, acceleration and orientation etc.) may vary rapidly namely in seconds. In the second example involving the automated aerial drone, events may occur even faster, for example changing a few hundred times per second, or even up to several thousand times per second. This is because the sensors need to register minute changes in the movement and position of the drone, so as to accurately and rapidly record the speed and position of the drone at any given time, to allow rapid adjustments to be made in response to any incoming data which may indicate that the drone is unstable or on a crash trajectory. Regardless of the speed of change, there is a clear requirement to report any activity as fast as possible such that the subsequent reactionary processing can commence as soon as possible to give more accurate real-time results for subsequent processing. However the best (fastest) data stream may vary at any given time due to changes in inherent properties of the communication channels used (which changes are out of control of the user or operator).

Under rapidly varying conditions, as in the above examples where the speed with which the data streams are received is important, there are advantages associated with using multiple data providers to provide data about the same entity. Firstly, it is advantageous for the data stream selection system 28 to receive data streams from several different data providers, as the speed with which the data is received from any one data provider can vary due to external conditions, and there is no guarantee that any one data provider will always be the fastest. Furthermore, as has been discussed earlier, the different communications channels between the data providers and the data stream selection system 28 may vary in performance over time, and factors such as network loading may prevent the data stream from a particular data provider from being received as quickly as possible. As the data stream selection system has no control over the communications channels, it is not possible to avoid this problem. Finally, by making use of data streams from multiple data providers 8a, 8b, 8c, the data stream selection system 28 is able to ensure redundancy in terms of the data received. This is advantageous as it ensures the continuity of data provision from the data stream selection system 28 to the data processors 8a, 8b, 8c - even if one of the data providers or its communication channels is broken or too slow to be of practical use, the data stream selection system 28 will still be able to guarantee continuous provision of data relating to a particular entity to the data processors 4a, 4b, 4c.

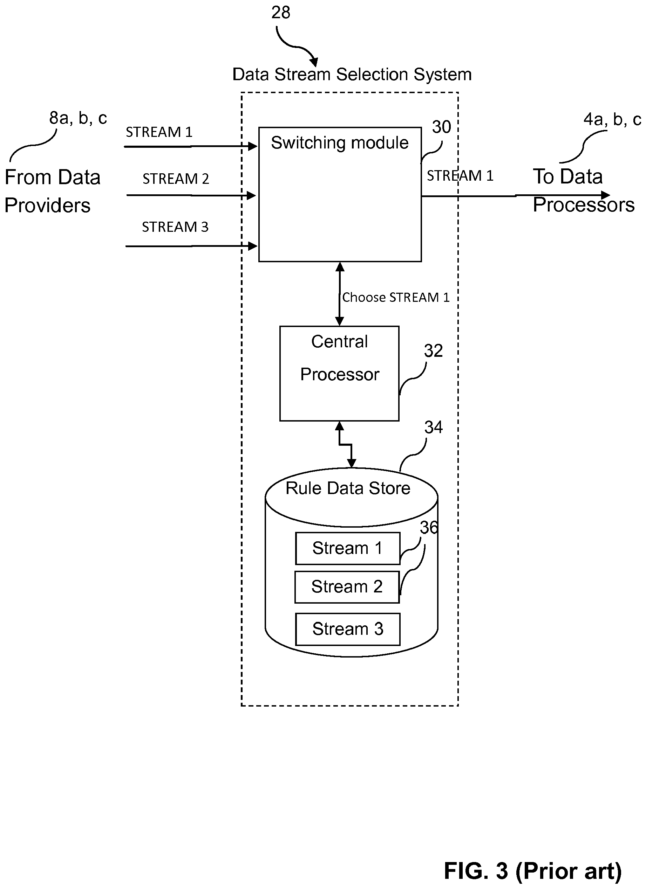

It is therefore clear that a problem arises in the above system when there is communications delay in the communications network between one or more of the data providers and the data stream selection system, as delays in receiving the data streams will be propagated through to the data processors, resulting in the provision of potentially out-of-date information regarding the entity. The prior art system (as is described in greater detail below with reference to Figure 3) uses historical data to select the most reliable or fastest (historically) one of the possible data streams to minimise the detrimental effects of this problem.

A further problem occurs when the data stream from one of the data providers 8a, 8b, 8c is missing some important parameters (for example, as a result of dropped data due to a malfunction in the data provider or in the communications network or because of an interruption in the communications channel). In these situations, there is a need to identify that that data stream is unreliable and to switch away from that data stream to a better one as soon as possible. In the prior art system this problem is only realised by either intermittent checks on the veracity of the selected data stream or by reporting from the data processors that there was a problem in the data stream being supplied to them. The solution would typically be a manual change in the selection of the data stream by the data stream selection system 28 to the next most reliable data stream, typically based on historical information.

However, given the speed with which the events occur for a particular entity (and hence the speed with which the parameters vary), the prior art solution can disadvantageously only resolve problems with a significant period of time having passed where the data stream was providing incorrect data or was not providing the data stream having the most up-to-date reporting of the events occurring at the object/entity. Furthermore, this reselection of data stream is not automatic.

Referring now to **Figure 3**, a typical prior art system used by a data stream selection system 28 to carry out selection of data streams is presented, and placed in context in a prior art environment. This prior art data stream selection system 28 comprises a switching module 30 which receives a plurality of data streams from several different data providers 8a, 8b, 8c (via a communications network) and selects the most accurate data stream; the selected data stream is subsequently provided to a plurality of data processors 4a, 4b, 4c via a communications network. The switching module 30 is in operative communication with at least one processor (labelled the central processor 32 in the figure) and at least one data store 34. The central processor 32 controls the stream analysis process and determines the most accurate data stream that is to be selected and subsequently propagated to the data processors 4a, 4b, 4c. In order to perform this analysis, the central processor 32 needs to access specific information regarding each of the streams that is stored in the data store 34 (for example, historical data 36 relating to the accuracy of the streams that have been received). This historical data may have been previously stored in the data store, and may further be updated at predefined regular intervals. The processor then uses this historical data as inputs when applying predefined rules (which may also be stored in the data store 34) to determine the most accurate data stream to select.

In one example, historical data regarding each of the streams may include past analyses of the percentage of time that a particular stream has been deemed to be the most accurate stream. Specifically, this data may be used to generate a score for each stream, indicating its historical accuracy and whether it should be used going forward. All of this information is used by the central processor 32 when applying the predefined rules, which may for example state that the central processor should select the stream which has previously been deemed the most accurate stream (e.g. has the highest accuracy score).

Once a particular data stream has been selected based on the stored data 36 and predefined rules, the identity of the stream and its origin are provided to the switching module 30, which subsequently selects that data stream and only forwards that selected data stream to the data processors 4a, 4b, 4c.

By operating using the above-described configuration, the prior art system is able to provide a data stream to the data processors which on average, over a relatively long period of time, has been found to be the most accurate data stream. Furthermore, due to the method by which the data streams are analysed, the prior art system is able to function substantially offline (or at least, without the need for extremely fast processors), as the information required to make the necessary decisions is essentially hard-coded into the system.

However, because of the prior art system's reliance on historical data and in-built pre-programmed rules, the prior art system is insensitive to rapid variances in the parameters that are contained in the data streams. Furthermore, in order to make any adjustments to the pre-programmed rules and data, the input of a human operator is required; even if this process was automated, at the very least, a time delay would occur whilst the system carried out an internal check and assessment before changing the selected data stream. The prior art system therefore is unable to react or respond in an automated manner to rapid variances (e.g. on timescales of seconds or less) of parameters in real-time, and it is not possible for the prior art system to always ensure that the most accurate stream is selected at any instant in time. In using the prior art system, any data processors who wish to utilise the value of a parameter at a particular point in time have no guarantee that the data stream provided by the prior art stream selector contains the most accurate value and state of the parameter at that particular point in time. This can be very problematic, particularly where the instantaneous accuracy of a particular stream differs greatly from the average performance of that particular field over a prolonged period of time.

EP2902924 A1 describes a method for automatically selecting a real-time video stream among a plurality of available real-time video streams. The method comprises a first step of selection of a set of relevant video streams from an initial set of available real-time video streams, said relevant video streams being related to a single event, a step of determination of an ordered subset of relevant video streams from the received set of relevant video streams, said determination being based on a received set of social interaction data associated to each of said relevant video streams, and a second step of selection of a single relevant video stream from the received subset of relevant video streams.

US 2016/080173 A1 describes devices, systems and/or methods to implement true real time pattern recognition and anomaly detection by leveraging hardware specifically designed for that purpose. In particular, digital signal processors (DSPs) are used to provide true real time analysis of digital signals. The system may convert the CEP stream itself to a format understood by the hardware components while retaining enough specificity to reference particular events for further processing and analytics, resulting in true real time performance for CEP.

WO 2015/186945 A1 describes a method for us on a first electronic device for performing multimedia recording. The method includes recording, by the first electronic device, a first multimedia stream, generating a first metadata associated with the first multimedia stream, receiving at least one second metadata associated with a second multimedia stream recorded by at least one second electronic device, and generating a final multimedia file based on an analysis of the first metadata and the at least one second metadata.

EP2750405 A2 relates to management of information streams. The information streams can be delivered according to adaptive streaming mechanisms. In one aspect, a method of data stream management can comprise receiving a plurality of data streams having a specific bit rate and a segmentation signaling structure, comprising at least one segmentation signaling marker. The method may also comprise monitoring the segmentation signaling structure of at least one data stream and supplying, based on the monitoring, a metric indicative of compliance with a predetermined segmentation signaling structure.

WO 2008/023352 A2 relates to generating a summary of a plurality of distinct data streams (for example video data streams). A plurality of related data streams are collected. The data streams comprise a plurality of segments and each segment is synchronized. Overlapping segments of the synchronized data streams are detected and one the overlapping segments is selected to generate a summary which includes the selected overlapping segment.

The present invention seeks to address or at least substantially reduce the above-described problems with the prior art systems.

### SUMMARY OF THE INVENTION

According to one aspect of the present invention, there is provided an automated data stream selection system for handling a plurality of data streams received in parallel from multiple data providers, and for selecting and subsequently outputting a preferred one of the plurality of data streams to one or more data stream receivers, wherein each data stream comprises a plurality of data records each including a plurality of parameters about a respective remotely-occurring event, the system comprising: a real-time stream analysis module arranged to carry out analysis of a newly-received data record of one of the plurality of data streams to determine if its data stream is faster than a presently selected data stream; and a switching module arranged to output the present selected data stream and to switch to outputting a faster received data stream upon receiving a command signal from the real-time analysis module; the real-time stream analysis module comprising: a latency analysis module for determining if the newly-received data record indicates the occurrence of a new remotely-occurring event; the latency analysis module including a data store storing a value of a first comparable parameter obtained from the present selected data stream and being arranged to: obtain data from the newly-received data record; determine whether the obtained data includes the first comparable parameter; compare a new value of the first comparable parameter from the newly-received data record with the stored value of the first parameter and determine whether there is a change from the previously stored value to the new value; and determine whether the change indicates a first detection of the occurrence of the new remotely-occurring event using a monotonic characteristic of one of the plurality of parameters of the newly-received data record; and an assessment module arranged to assess, for a newly-received data record which provides data about the new remotely-occurring event as determined by the latency analysis module, the quality of the data record within the data stream; wherein the real-time stream analysis module is arranged to generate the command signal if the newly-received data record has comparable data which indicates a first detection of a change of value of the first parameter indicating the occurrence of the new remotely-occurring event and the data records in the data stream are of a quality above a predetermined threshold.

Preferably the first parameter has the monotonic characteristic and the latency analysis module is arranged to determine whether the change indicates a first detection of the occurrence of the new remotely-occurring event using the monotonic characteristic of the first parameter of the newly-received data record.

Alternatively, in another embodiment, the newly-received data record has a second comparable parameter having the monotonic characteristic, the data store is arranged to store a value of the second comparable parameter obtained from the present selected data stream and the latency analysis module is arranged to: determine whether the obtained data includes the second comparable parameter; compare a new value of the second comparable parameter from the newly-received data record with the stored value of the second parameter and determine whether there is a change from the previously stored value to the new value; and determine whether the change indicates a first detection of the occurrence of the new remotely-occurring event using the monotonic characteristic of the second parameter of the newly-received data record.

Preferably, the data store is arranged to store values of a set of first comparable parameters obtained from the present selected data stream and the latency analysis module is arranged to: determine whether the obtained data includes one of the set of first comparable parameters; and compare a new value of the first comparable parameter from the newly-received data record with the stored value of the corresponding first parameter in the set of first parameters and determine whether there is a change from the corresponding previously stored value to the new value.

Where a second parameter is being used, the real-time stream analysis module may be arranged to store a set of second comparable parameters and the latency analysis module may be arranged to: determine whether the obtained data includes one of the set of second comparable parameters; compare a new value of the second comparable parameter from the newly-received data record with the stored value of the corresponding second parameter in the set of second parameters and determine whether there is a change from the corresponding previously stored value to the new value.

In some embodiments, the latency analysis module can be arranged to apply a threshold in determining whether there has been a change from the previously stored value of the first parameter to the new value. This enables the data records of different from different data providers having different tolerances in reporting event parameters to be accommodated.

Preferably the assessment module is arranged to determine if the newly-received data record comprises all of the expected data compared to a predetermined template of parameters for a data record and to generate the command signal if the expected data for the predetermined parameters is present in the newly received data record.

Also the assessment module may be arranged to determine if the newly-received data record is missing expected data as compared to a predetermined template of parameters and to enhance the received data record by adding in the missing data in the newly-received data record.

In one specific embodiment, the assessment module comprises a timestamp module for applying a timestamp to the newly-received data record if the newly-received data record does not have a timestamp provided therein.

Preferably the real-time stream analysis module is arranged within the switching module such that received data record can be enhanced as a function within the switching module and output therefrom, to provide faster throughput.

As an additional complication, because the data providers are independent of the data stream selection system (and the data providers are usually located remotely from the data stream selection system), each data provider may express the parameters in the data stream in a particular format (different to those of the other data providers), making it very difficult for the data stream selection system to carry out a quick and accurate direct comparison of the data streams in real-time. As a simple example, if one of the data streams were to express the data provided in inches and another data stream were to express the data provided in centimetres, it is clear that the received numerical data could not be directly compared.

Accordingly, the real-time stream analysis module may further comprise a pre-processing means arranged to convert the data of the newly-received data record into a preferred predetermined data format. The pre-processing means may also be arranged to normalise the data provided in the newly-received received data record. Also the pre-processing means may be arranged to convert the plurality of data records received in parallel into a serial data stream.

According to another aspect of the present invention there is provided an automated data stream selection method of handling a plurality of data streams received in parallel from multiple data providers, and of selecting and subsequently outputting a preferred one of the plurality of data streams to one or more data stream receivers, wherein each data stream comprises a plurality of data records each including a plurality of parameters about a respective remotely-occurring event, the method comprising: carrying out real-time analysis of a newly-received data record of one of the plurality of data streams to determine if its data stream is faster than a presently selected data stream; outputting the present selected data stream; and switching to outputting a faster received data stream upon receiving a command signal; the carrying out real-time analysis step comprising: storing a value of a first comparable parameter obtained from the present selected data stream; establishing if the newly-received data record indicates the occurrence of a new remotely-occurring event; the establishing step comprising: obtaining data from the newly-received data record; determining whether the obtained data includes the first comparable parameter; comparing a new value of the first comparable parameter from the newly-received data record with the stored value of the first parameter; calculating whether there is a change from the previously stored value to the new value; and concluding whether the change indicates a first detection of the occurrence of the new remotely-occurring event using a monotonic characteristic of one of the plurality of parameters of the newly-received data record; and assessing, for a newly-received data record which provides data about the new remotely-occurring event as determined by the latency analysis step, the quality of the data record within the data stream; wherein the carrying out real-time analysis step comprises generating the command signal if the newly-received data record has comparable data which indicates a first detection of a change of value of the first parameter indicating the occurrence of the new remotely-occurring event and the data records in the data stream are of a quality above a predetermined threshold.

### BRIEF DESCRIPTION OF THE DRAWINGS

One or more embodiments of the invention will now be described, by way of example only, with reference to the accompanying drawings, in which:
**Figure 1** is a schematic block diagram showing a system for automated selection of data streams and an environment in which the system operates;

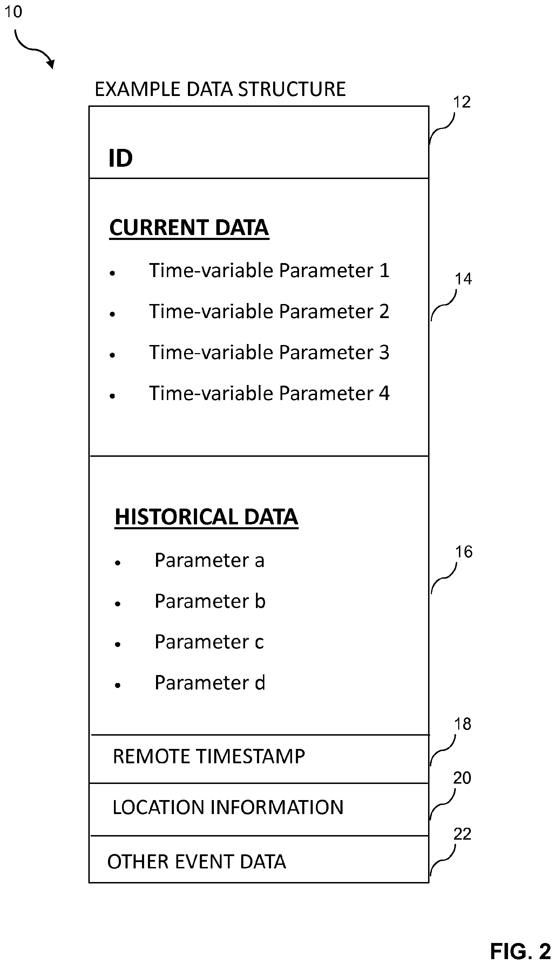

**Figure 2** is a schematic diagram illustrating an example data structure of a record (or data packet) which may be comprised within a data stream used in the system of Figure 1;
**Figure 3** is a schematic block diagram of components of a prior art data stream selection system;
**Figure 4** is a schematic block diagram of a data stream selection system for automated selection of a data stream according to an embodiment of the present invention and the environment in which the system operates;
**Figure 5** is a schematic block diagram of the data stream selection system of Figure 4 showing further details of an example module that may be used for real-time stream analysis;
**Figure 6** is a flowchart showing an overview of the general method of operation of the data stream selection system of Figure 4, including analysis of input data streams and selection of the best stream;
**Figure 7** is a schematic diagram illustrating the process by which incoming data streams are analysed and compared so as to select the best stream, according to an embodiment of the present invention;
**Figure 8** is a diagram illustrating the effects that may be achieved by the data stream handling system of Figure 4;
**Figure 9** is a flowchart showing further details of a 'determining the best stream' step of the method of operation of the data stream selection system of Figure 6;
**Figure 10** is a flowchart showing further details of a 'core processing' step of the 'determining the best stream' step shown in Figure 9; and
**Figure 11** is a flowchart showing further details of how the data stream selection system of Figure 6 would check the data records during the 'core processing' step of Figure 10 to determine if a new parameter value had previously been observed.

### DETAILED DESCRIPTION

The following description sets out specific non-limiting embodiments of the present invention.

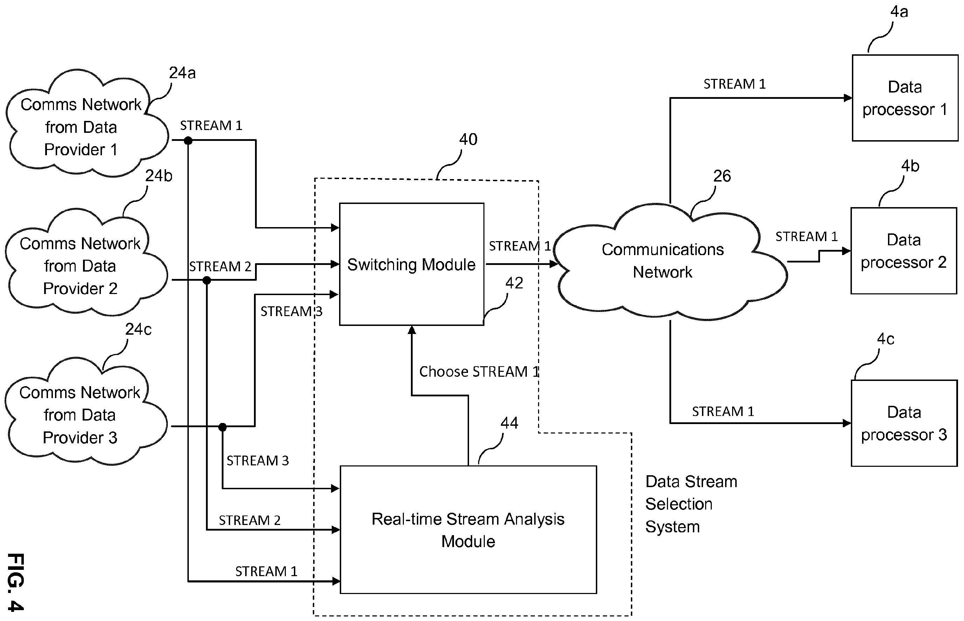

Referring to **Figure 4****,** a data stream selection system 40 according to an embodiment of the present invention is now described. The system of the present embodiment has a similar configuration to that described for the prior art system 28 (shown in Figure 3), but operates in a very different manner. The objective of the system is the same as that of the prior art system described previously and the overall capturing of activity information about an object/entity by different data providers and thereafter providing the best data stream to the data processors 4a, 4b, 4c is the same. However the selection of the best data stream and the configuration of the data stream selection system 40 are different. To avoid unnecessary repetition, the following description will focus on these differences.

As with the prior art system described earlier, the system of Figure 4 is also configured to process data streams from multiple different data providers and to determine, based on certain properties of the data streams, which data stream is the most accurate. This data stream is subsequently selected by a switching module 42 and propagated via a communications network 26 to a plurality of data processors 4a, 4b, 4c. In certain embodiments, communications between the data stream selection system 40 and the data processors 4a, 4b, 4c may be direct or via low-latency network.

However, in contrast with the prior art system of Figure 3, the system of the present embodiment comprises a real-time stream analysis module 44 which carries out involved processing of the incoming data streams in real-time, to determine the best data stream for selection at any given time, a feature which is not present in the prior art system.

The incoming data streams from the data providers are all forwarded to the switching module 42 in parallel; the switching module 42 operates in a similar manner to a multiplexer and selects from the incoming data streams at its input the data stream to be output to the data processors 4a, 4b, 4c. This selection is based on a control signal received from the real-time stream analysis module 40. In addition, all of the incoming data streams are also forwarded in parallel to the real-time stream analysis module 44 which controls the selection and final output of the switching module 42 based on an automated real-time analysis of the provided data streams. In some embodiments, the incoming data streams may be processed by a common system gateway (not shown) which subsequently forwards the information from each stream to both the real-time stream analysis module 44 and the switching module 42; in other embodiments, the real-time stream analysis module 44 and switching module 42 may have separate (individual) gateways (both not shown) receiving the incoming data streams.

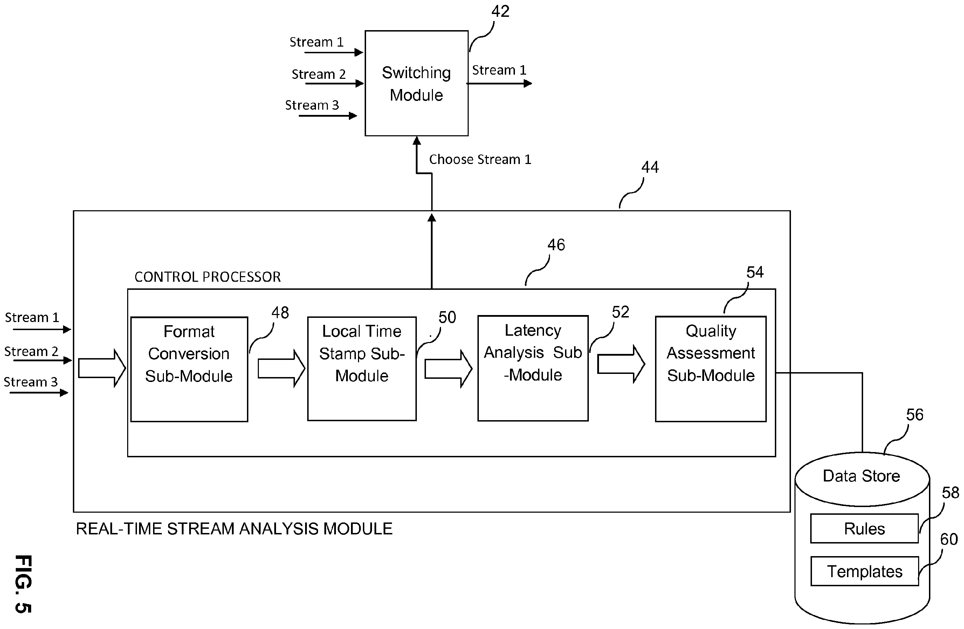

With reference to **Figure 5**, a more detailed description of the real-time stream analysis module 44 according to the present embodiment will now be provided.

The real-time stream analysis module 44 of the illustrated embodiment comprises a control processor 46 which controls the steps of analysing the data streams and selecting the best stream for subsequent output to the data processors; the control processor comprises several sub-modules, each arranged to carry out a different task: a format conversion (FC) sub-module 48, a local time stamp (TS) sub-module 50, a latency analysis (LA) sub-module 52 and a quality assessment (QA) sub-module 54. Each sub-module is configured to process all of the incoming data streams in sequential order. In other words, the streams will be processed in the order in which they arrive at the real-time stream analysis module 44. The separation between arrival times is usually very small (in fact, sometimes data streams will only arrive nanoseconds or picoseconds apart), however the analysis of this embodiment is generally carried out on a first-in-first-out basis. In other embodiments, this need not be the case and it is possible that there may be multiple FC, TS, LA or QA sub-modules, each configured to process a specific stream.

The real-time stream analysis module 44 is in operative communication with a data store 56 which contains pre-stored information relating to each data stream (for example, the stream origin, the parameters which are contained within the stream and certain intrinsic or inherent properties of the stream), and may also contain one or more predefined rules 58 governing the analysis of the streams (for example, rules relating to methods for identifying comparable properties of the data streams). The data store may also contain several format templates 60, each template corresponding to a different data provider, and containing instructions for the real-time stream analysis module to extract the required information from each data stream.

It is important to note that although the rules 58 governing the identification and comparison of specific time-variable properties found within the data streams, as well as the templates 60 required for extracting relevant data from the data streams, are stored in the data store 56, whilst carrying out the real-time stream analysis, the processor 46 will not retrieve data from the data store 56. Instead, the required information is effectively pre-loaded or pre-programmed into the processor 46 (and the associated sub-module where necessary), prior to the real-time operation of the control processor 46, so that this information can be used immediately for real-time analysis without the need to access the data store 56 (and the associated delay that would result).

In the present embodiment, the FC sub-module 48 has been pre-programmed with the templates that will need to be applied for each of the incoming data streams and is therefore configured to extract the required data from each data stream as soon as it arrives. The TS sub-module 50 is configured to apply a local timestamp to each incoming data record if it is deemed that the data record does not already contain a timestamp applied by the data provider. The LA sub-module 52 is configured to identify certain intrinsic comparable time-varying properties of the data streams (according to the predefined rules which may be stored in the data store), so as to determine for a given set of parameters which of the data streams has the lowest latency at that particular time. The QA sub-module 54 is configured to assess the quality of information provided by each data stream (e.g. whether there are any missing pieces of information).

In one non-limiting embodiment, the system of the present invention is implemented using 2 Linux boxes, each of which comprises 2 CPUs, providing a total of 20 processor cores. Each Linux box provides 28GB of local memory, which is sufficient to process up to 200 data streams each from 3 to 4 providers. The system of this embodiment utilises 2 Linux boxes for resiliency, in case one of the Linux boxes malfunctions.

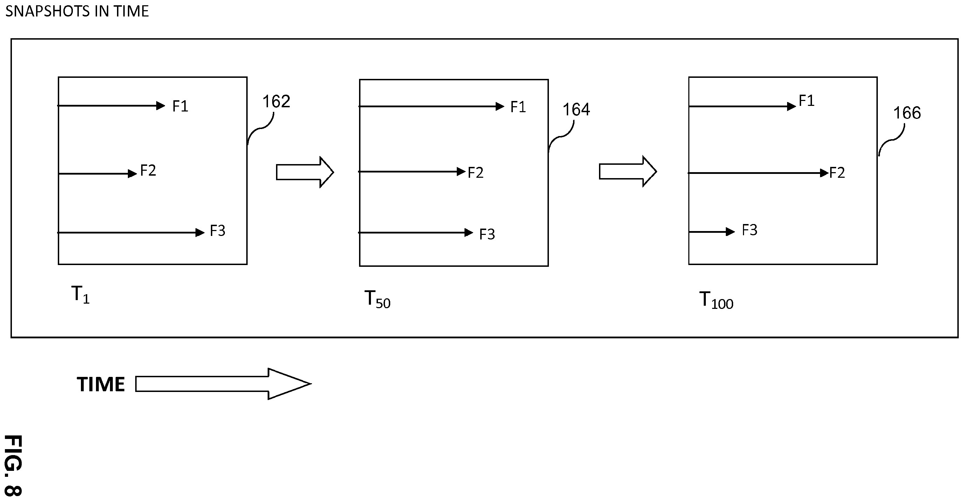

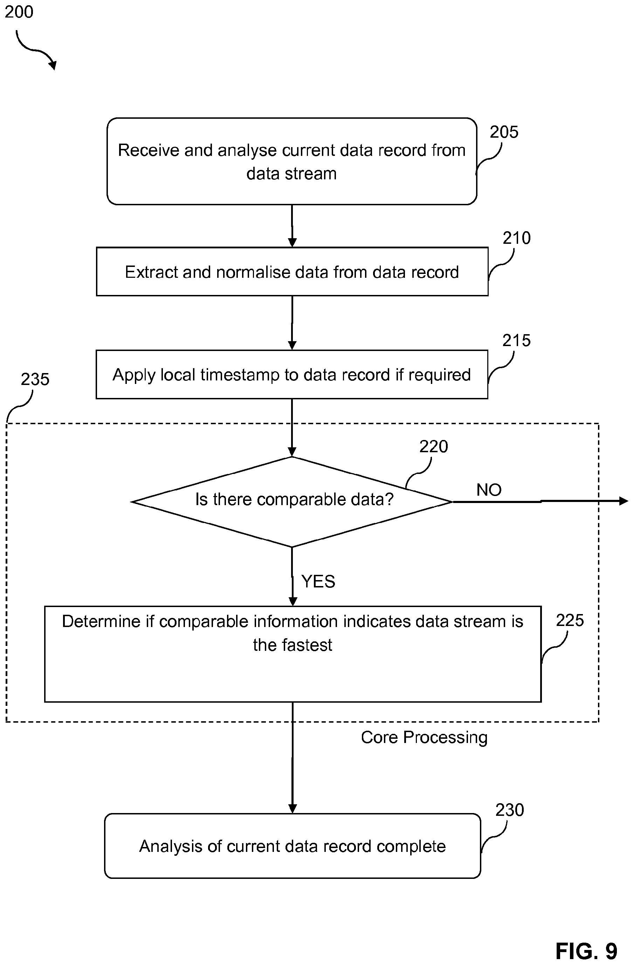

A more detailed description of the individual steps carried out by the real-time stream analysis module 44 is provided later with reference to **Figures 8** and **9**. However a brief summary of the overall method and its effects will now be presented.

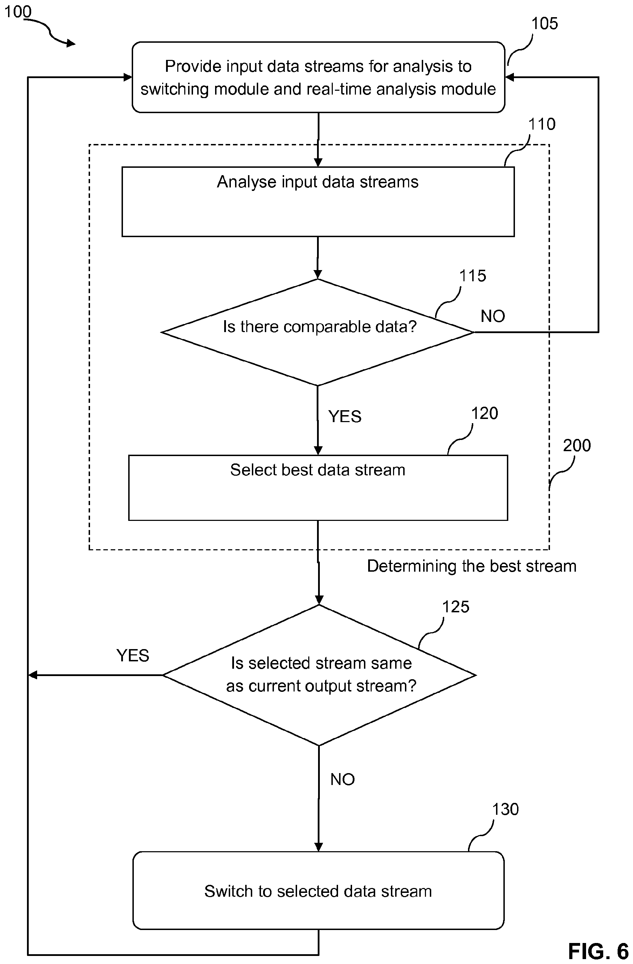

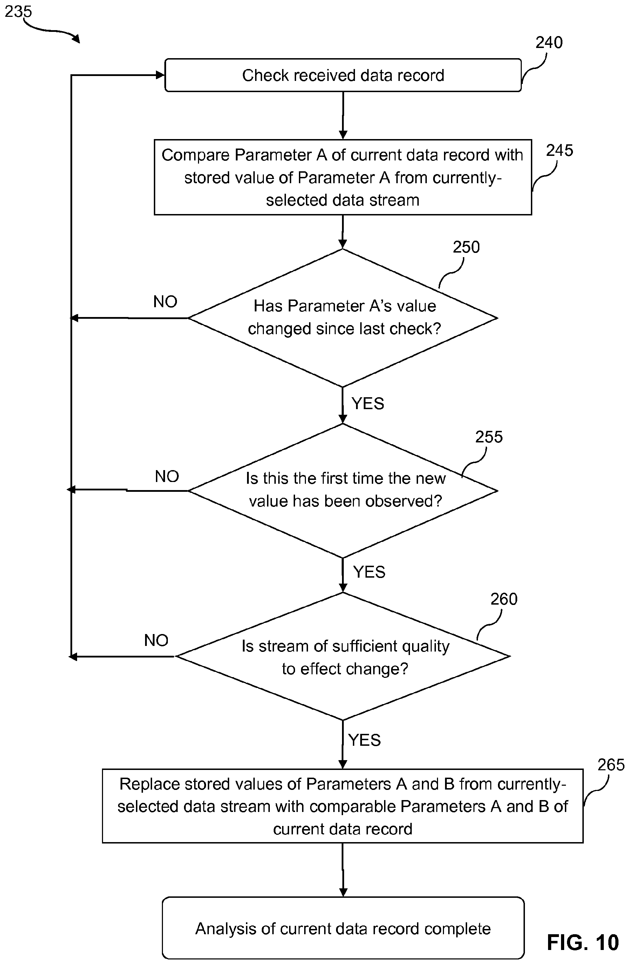

The flow diagram of **Figure 6** shows a general overview of the method 100 which is used by the data stream selection system 40 of the present embodiment (described above with reference to Figures 4 and 5). The input data streams are provided in parallel in Step 105 to the switching module 42 and the real-time stream analysis module 44. The real-time stream analysis module 44 then carries out in Step 110 a serialised analysis of the input data streams in the order in which they are received (utilising the various sub-modules described above), so as to determine which of the data streams has the lowest latency and should therefore be deemed the best data stream for output. This analysis includes a determination in Step 115 as to whether the current data stream (current data record of a current data stream) comprises comparable data (i.e. the system performs a check to ascertain the presence of at least one of a set of certain parameters (Parameter A) within the data record of the current data stream that are known to be comparable; this will be described in greater detail subsequently with reference to Figures 9 and 10). If no comparable data is detected in Step 115, the data stream is not analysed further, and processing of the next data stream is begun; otherwise, if comparable data is detected, the system determines in Step 120 whether the current data stream has the lowest latency. Once the analysis of the data streams is complete and the fastest stream has been identified and selected, a check is carried out in Step 125 to determine if there is a need to change the current selected data stream. If a change is required, a command is sent in Step 130 to the switching module 42 from the control processor 46, instructing the switching module 42 to output the selected best data stream. Subsequently, the switching module 42 then continues to output the selected data stream to the data processors 4a, 4b, 4c until another command is received from the control processor 46, instructing the switching module 42 to switch to a different data stream. It is to be noted that the control processor 46 may determine that there is no need to send any message (control signal) to the switching module 42 because the switching module 42 does not switch to a new stream as the current data stream has been determined to be the best.

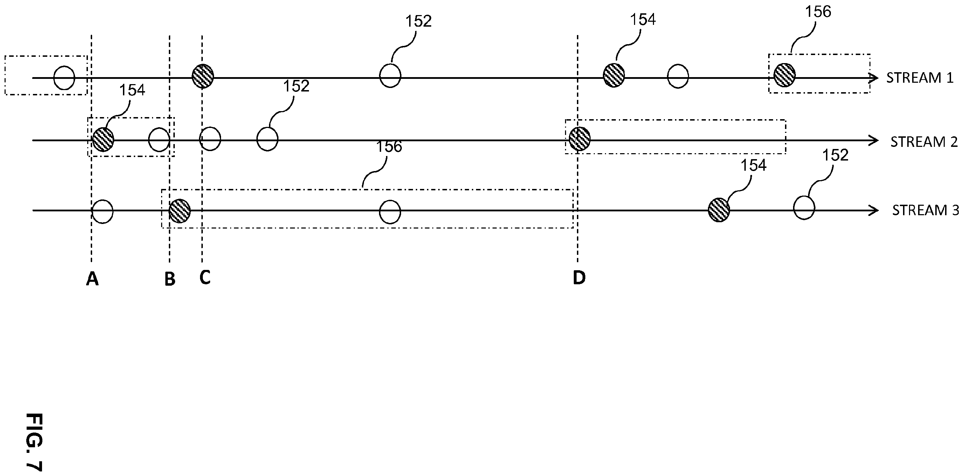

**Figure 7** illustrates the process by which multiple data streams are analysed and how the final stream that is output by the data stream selection system 40 is switched depending on the results of the analysis. Each of the horizontal lines in the figure corresponds to one of the data streams under consideration by the system, and the arrows on the lines indicate the flow of time. The circles 152, 154 on each line correspond to data packets which in combination make up the data stream and are sent from the data providers 8a, 8b, 8c to the data stream selection system 40 whenever an event occurs in relation to one of the entities 6 that is being monitored by the data providers 8a, 8b, 8c. The data packets which are further to the right of the diagram are received by the data stream selection system 40 at an earlier time than those data packets that are further to the left in the diagram. It should be appreciated that not all of the data packets in a data stream will contain time-variable parameters that the data stream selection system is able to compare - the shaded circles 154 correspond to those data packets which comprise comparable data.

The horizontal boxes 156 with broken lines surrounding portions of the data streams indicate a period of time for which a particular data stream is deemed to be the fastest and is selected for output to the data processors 4a, 4b, 4c. It may be seen that, based on an analysis and comparison carried out on earlier data packets (not shown in the diagram), Stream 1 has initially been selected as the best and fastest stream. However, at time A, the system detects that Stream 2 comprises a data packet which contains a comparable parameter (Parameter A). Subsequent analysis of that parameter yields the result that the particular value of that parameter has not previously been observed by the system, and Stream 2 is therefore deemed to be the fastest stream at that point in time as it is the first to provide a specific new piece of data. The switching module 42 therefore switches so as to output Stream 2 instead of Stream 1. A similar analysis occurs at time B, where a data packet from Stream 3 is detected to contain a comparable parameter, the value of which had not been previously observed by the system. The switching module 42 therefore switches from outputting Stream 2 to outputting Stream 3.

At time C, the system detects the presence of a comparable parameter (Parameter A) in the data packet of Stream 1. However, in this case, analysis of the parameter's value by the system reveals that it matches the value of the parameter which had previously been obtained from Stream 3 at time B. As this analysis has revealed that Stream 1 is slower than Stream 3, no command is sent to the switching module 42 to switch streams, and Stream 3 continues to be output until time D, where it is deemed by analysis of a comparable data packet from Stream 2 that Stream 2 again has a new value of a comparable parameter.

It is to be appreciated that this example shows that switching streams can only occur when there is a data packet with at least one comparable parameter (Parameter A), and further shows that streams are only switched when that comparison shows a new value for that parameter.

**Figure 8** illustrates the effects of the system of the present embodiment and the results that may be achieved. The figure provides three schematic snapshots 162, 164, 166 in time which highlight the relative speed of three data streams (Streams 1, 2 and 3) at different points in time (T₀, T₅₀ and T₁₀₀). By using the above-described system configuration of the present embodiment, which effectively checks the status of the data streams following every event, the system is able to determine which stream is the fastest at any one time. By switching between output streams based on the results of a latency (and/or quality) assessment, the system of the present embodiment ensures that the data processors 4a, 4b, 4c are provided with the fastest and most accurate (and hence best) stream as far as possible. In the example shown in Figure 8, the system of the present invention would initially output Stream 3 (F3) to the data processors 4a, 4b, 4c, however at a later time (T₅₀) upon receipt of a data packet from Stream 1 indicating the occurrence of an event, the system would determine, based on the comparable parameter analysis described above, that Stream 1 (F1) had become the fastest stream and would switch to outputting that stream; following subsequent comparable analyses upon receipt of a data packet from Stream 2 indicating the occurrence of another event, the system switches once again (at T₁₀₀), this time to Stream 2 (F2) which has now become the fastest stream. In other words, the system of the present invention is configured such that, as far as possible given the inherent physical limitations and capabilities of the system components themselves, the data processors are always provided with the best, most up-to-date stream data in real-time.

It will be appreciated that the above-described example of Figure 8 presents three examples to aid the reader's understanding, and that in reality the present system would be able to monitor the streams and switch between output streams in a much shorter timescale. Specifically, the present system has the potential capability to switch between streams every time a new data packet (indicating the occurrence of an event) is received by the system. In some cases, depending on the arrival rate of the data packets in a particular stream (which varies according to the number of events that occur for a particular entity or the speed of the network channels that are in use), switching may occur as rapidly as every few tenths of a millisecond.

Referring back to the prior art system of Figure 3, it will be appreciated that this prior art system will not be able to update the stream that is output to the data processors 4a, 4b, 4c so as to reflect the time-dependent changes illustrated in Figure 8. Instead of switching from F3 to F1 to F2 at the appropriate points in time (and making additional changes in between those switches whenever an event occurs), the prior art system would most likely continuously output only a single stream over that time period based on the historical information about the streams. For example, if F1 were deemed to be (on average) the best stream based on historical data, then only at T₅₀ would the output stream from the prior art system accurately reflect the values of the parameters; at the other points in time, the data processors 4a, 4b, 4c would not be receiving the fastest stream and therefore at any given time, they would most likely be receiving out-of-date information. At best, the prior art system would still not be able to monitor and switch streams as quickly as the system of the present invention, and certainly not in real-time, due to the delay introduced by the need to process the streams.

Furthermore, it will also be appreciated that if (for any reason) the stream currently selected for output were to omit a large amount of data or the data provider of that stream were to malfunction, the prior art system of Figure 3 would have severe difficulties in functioning. In order to deal with this, most prior art systems would need to have a time-out criteria programmed into the system as a fail-safe, which would ensure that if the currently-selected data stream stopped providing data for a specified time period, the system would raise an alarm and require that a switch be made to a different data stream. In such cases, it is possible that the prior art system would cease to work for a period of time (as a long time-out criteria would need to be set to prevent it from being triggered accidentally by a slightly slower-than-average connectivity) and manual intervention may even be required to restore normal operation.

Such time-out criteria would not be required for the system of the present embodiment as the present system's method of analysing and switching between streams in real-time would prevent the above-described system-malfunction scenario from occurring. If the currently-selected 'best' stream were to cease providing data, the real-time stream analysis module 44 would simply omit that stream from its analysis as the data stream would not be providing any data packets containing comparable parameters. Rather, as soon as an alternative stream provided an updated value of a comparable parameter (Parameter A), the control processor 46 would instruct the switching module 42 to switch away from the malfunctioning stream and switch to the alternative stream. The present system will therefore not experience any issues with latency or time delays resulting from malfunctioning streams as the system will almost seamlessly switch to a different 'best' stream.

A detailed description of the stream analysis and selection methods applied by the system of the present embodiment are now provided with respect to **Figures 9** **and** **10** respectively.

The data stream analysis and data stream selection steps of the embodiment of Figure 6 (highlighted in the figure as corresponding to the process 200 of 'determining the best stream') are now described in greater detail with reference to **Figure 9****.** These steps commence in Step 205 with the data streams being provided to the real-time stream analysis module 44 for analysis. Upon entering the real-time stream analysis module 44, incoming data streams are analysed and processed in a serialised manner (i.e. the data records in the data streams are processed in order of their arrival at the real-time stream analysis module 44). The following describes the process for a single data record, for ease of understanding. However in practice the process is repeated for each new data record received.

Each incoming data record is first passed to the FC sub-module 48 where the necessary parameter values and other stream- or entity-specific data are extracted in Step 210. In some (preferred) embodiments, the extraction of relevant information from each data record is carried out based on pre-stored templates relating to the format of a particular data stream. In other words, the FC sub-module 48 has been pre-programmed with instructions relating to where the necessary information is provided within the incoming data records of each data stream under consideration, and this therefore allows the FC sub-module 48 to quickly and easily extract the necessary information. This increases the speed at which each data stream is processed. In other embodiments, the data record may be converted (mapped) into a more easily readable (standard) format allowing the data record to be easily processed by the subsequent sub-modules to analyse the necessary information in subsequent steps.

In addition, as previously discussed, the data stream selection system 40 merely receives data streams from each data provider and has no control over the regularity or form with which the data streams are provided (namely that the data streams operate asynchronously), which makes it difficult for the present system to compare the time-varying parameters of each data record accurately. Taking the aerial drone example provided earlier, a first set of sensors may be programmed to send data packets at a frequency of one packet per second of flight time; a second set of sensors may be programmed to send data packets at a frequency of one packet per centimetre travelled by the drone. It may therefore be seen that the time-varying parameters of the first sensor set will not be readily comparable to the corresponding time-varying parameters of the second sensor set (as one will be expressed per centimetre while the other will be expressed per second). Furthermore, the relative frequency of arrival of the data packets from the two sensor sets will depend on the speed of the drone - the second sensor set may send data packets more frequently than the first sensor set if the drone is travelling fast enough. In order to address this issue, the data stream selection system 40 of the present embodiment also carries out a normalisation step on the information or data that has been extracted from the relevant data records to ensure that the relevant parameters can be compared and analysed correctly. Techniques for normalisation of data are well known to the skilled person and are not explained further herein.

Once the data extraction and normalisation processes in Step 210 are complete, the serialised data records are passed to the local TS sub-module 50, where the current data record is checked in Step 215 for the presence of a remote timestamp applied by the data provider - a local timestamp is applied to that data record if it is determined that the data record does not already possess a remote timestamp applied by the data provider 8a, 8b, 8c, to ensure that the data record can be uniquely identified in subsequent processing where necessary. The data record is then passed to the LA sub-module 52, which checks in Step 220 for the presence of certain predetermined comparable time-varying parameters (e.g. intrinsic properties of the data stream that vary with time) within the data record - referred to herein as Parameter A for convenience. If comparable parameters are identified as being present in Step 220, the LA sub-module 52 then carries out a simple analysis in Step 225 (described in detail later) to determine whether the parameter values (of Parameter A) of a particular data record are indicative of the corresponding data stream having the lowest latency at that instant in time. The data stream to which the current data record belongs is thereby identified as being the fastest stream and is therefore deemed in Step 230 to contain the most accurate data at that point in time. In the present embodiment, the LA sub-module 52 has already been provided or pre-programmed with a pre-defined set of time-varying parameters (set of Parameters A) that are deemed to be useable for comparisons with two or more of the received data streams. The LA sub-module 52 is therefore able to monitor or check each data record as it arrives to detect the presence of one of these comparable parameters (Parameter A) and, following a positive detection, to identify if the current data record comprising that parameter is the first to show a change in the value of that parameter (from a known value e.g. the previously recorded comparison value). If so, that data stream will be deemed to be the fastest. Additional details regarding the comparison of time-varying parameters (carried out in the 'core processing' stage 235 indicated in Figure 9) are provided later with reference to Figure 10.

In different embodiments of the present invention, different time-variable parameters (Parameter A) describing properties of the event/object provided in the data streams may be used for comparison. In one embodiment, each of the data streams may contain a remote time stamp of an event occurring that was applied by the respective data provider prior to sending the respective data stream to the data stream selection system. The LA sub-module 52 may monitor the incoming data records to identify which data stream comprises a data record that delivers an updated value of the remote timestamp (Parameter A) first. This data stream will then be deemed to be the fastest, most accurate stream at that point in time.

In additional or alternative embodiments, another time-varying parameter (hereinafter referred to as Parameter B) describing a property of the event/object provided in the data streams may be used to carry out a comparison of relative stream latency. For example, each data stream may contain a parameter (Parameter B) indicating direction information (such as a bearing) and the first stream to provide a data packet showing a change in this other comparable parameter (Parameter B) is selected as the fastest and most accurate data stream.

It should be noted, however, that in the present embodiment it is important to be able to distinguish between data records which describe an event known to the system (namely a current or past event) from data records which describe a new event. This is because the detection of a new event is used by the system as the key criteria for determining the fastest data stream. The way in which a new event is detected is, as has been explained above, by detecting a change in one of a predetermined set of comparable parameters (Parameter A). However, to ensure that the change is reflective of a new event rather than an old event, which is being reported very late for example, at least one other predetermined parameter (Parameter B) is used to corroborate this, namely whether the change in value is the first detection of a change in the value of the parameter (Parameter A). In this embodiment the LA sub-module 52 considers the change in the value of at least one other predetermined parameter (Parameter B) to confirm the positioning of the data record in time relative to the position of a data record which provided the previously stored value of the other predetermined parameter (previously stored value of Parameter B). The at least one predetermined parameter (Parameter B) used for this comparison must vary monotonically with time - the detected value of that parameter must solely increase (or decrease) with time; parameters which vary randomly with time (i.e. may either increase or decrease with time) will not be useful for this comparison. Examples of parameters which would vary monotonically (in the context of the vehicle example described earlier) include the cumulative distance travelled of the vehicle (which would only increase with time), or the amount of fuel in the vehicle (which would only decrease with time). The monotonic variation of each Parameter B's value is important as it allows the system to distinguish easily and quickly between past and future events - a change in Parameter B's value provides an indirect indication of the passage of time. This will be discussed further subsequently.

It is to be appreciated that in some embodiments it may be necessary to apply a threshold to the values of the comparable parameters to determine if there has been a change. This is particularly the case where a variable can take a value from a continuous range of values rather than a discrete set of values. For example when looking at a speed parameter, to determine whether there has been a change of the value of that parameter there will be a level of tolerance applied to the value of that parameter which does not indicate a change. Once the value has exceeded the threshold to signify a change in speed, for example, then it can be considered to be a different value to help establish that the value of this parameter has actually changed.

This method of identifying comparable intrinsic time-varying properties of the data streams is advantageous as it is event-triggered and driven. In other words, every time a new data record is received by the system (corresponding to an event that has occurred in relation to an entity), the detection and subsequent analysis of comparable parameters is carried out by the system. This method is also useful for dealing with the asynchronous operation of the data providers and the data streams that each data provider generates, as it does not require all the data streams to be present for an analysis to be carried out. This feature therefore allows the present system to switch between data streams incredibly rapidly, such that every variation in parameters (regardless of how small - but significant: being above a measurement error threshold for example) may be used to trigger a change in the output stream

In some instances, one or more of the parameters that are normally included in a particular data record may be missing from that data record (for example, due to a malfunction in the data provider or due to a faulty or slow communications channel). The LA sub-module 52 will therefore be unable to conduct an analysis on this data stream as the necessary comparable parameters are not obtainable. In such cases, the real-time stream analysis module will attempt to maintain the status quo until a comparison can be carried out. In some embodiments, the LA-sub-module 52 may simply not carry out an analysis using the defective data stream (as no comparable parameters will be detected) and it will be discounted entirely from subsequent analyses.

Further details of the core processing stage 235 of parameters from different data streams, as carried out by the real-time stream analysis module 44 of the present embodiment, will now be provided with reference to **Figure 10**.

According to the present embodiment, the LA sub-module 52 receives and analyses a plurality of data streams in a serialised manner - the data records from each of the data streams are processed one by one in the order in which they are received, although the time gap between the arrival of streams at the data stream selection system may be minimal (a few nanoseconds or picoseconds). Initially, the LA sub-module 52 checks in Step 240 the incoming data stream and determines in Step 245 if it contains a data packet including one of a set of known comparable time-varying parameters - if it does not, that data stream is ignored and the next stream to arrive is analysed; if the stream does contain a data packet with a comparable parameter (Parameter A), the LA sub-module 52 carries out an assessment of the value of that parameter. Specifically, the assessment determines in Step 250 if the parameter's value has changed since the last time that particular parameter was detected. If a change is observed in Step 250 in the value of the parameter (Parameter A), the LA sub-module 52 then assesses in Step 255 whether this new value of the parameter had been previously observed in any of the other preceding data streams. This assessment in Step 255 may be carried out by comparing the parameter value to a saved parameter value (of Parameter A) that is stored by the LA sub-module 52 in a data store (not shown) and updated or overwritten every time a new change (representing a new event) in the parameter value is detected. If it is determined in Step 255 that the observed parameter value in the data record has not previously been seen (i.e. differs from the saved parameter value or a past Parameter A value), the stream under consideration is deemed to be the fastest as it has provided the most up-to-date value of the comparable parameter under consideration.

In carrying out its assessment, the LA sub-module 52 is able to determine in Step 255 whether a value of a 'newly-observed' but predetermined parameter is truly indicative of a new event occurring to the object/entity, or is simply a reflection of an event which occurred in the past (but has been received later as a result of a time delay in receiving the data stream itself, for example, due to a malfunctioning communications network). As discussed previously, this distinction between past and future events is possible due to the use of a predetermined parameter (Parameter B) that varies monotonically - i.e. the parameter value only ever either increases or decreases over time.

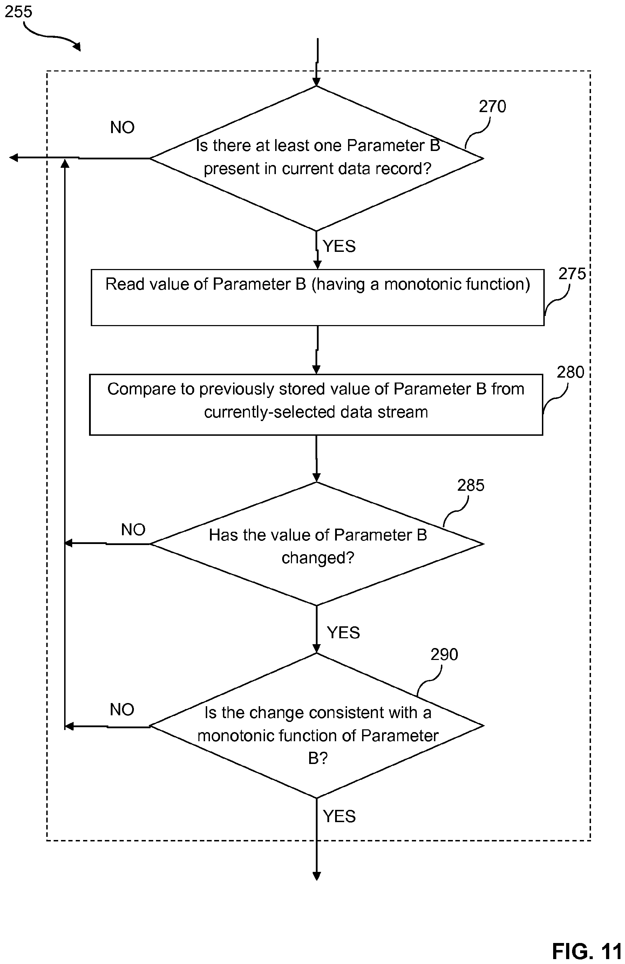

Further details of Step 255 will now be described with reference to Figure 11. The LA sub-module 52 checks in Step 280 for the presence of at least one Parameter B (having a monotonic function associated with it) in the data record under consideration. If no Parameter B value is present, then the data record is not considered any further; if a Parameter B value is present, the LA sub-module 52 then reads the value of that parameter in Step 275 and compares the value in Step 280 with a previously stored value of that particular Parameter B from the currently-selected data stream. A check is then performed in Step 285 to determine if the value of Parameter B has changed compared to the stored value, and if so, a further check is performed at Step 290 to determine if the change is consistent with the monotonic function of Parameter B. If it is determined in Step 290 that the value of Parameter B corresponds to a change in the parameter in the expected manner (in accordance with the monotonic function), it will be clear that this newly-observed parameter value indicates the occurrence of a new event; if the value of the newly-observed parameter corresponds to a change in the parameter (compared to the currently stored value) which runs counter to expectations (contrary to the monotonic function), it will be clear that this corresponds to a past or current event. For example, a data stream providing a new value of the cumulative distance travelled by a vehicle which is *less* than the current stored value will be deemed to have been subject to a significant time delay in transmission, and this change in parameter value will not trigger a change to that stream, as it is clearly not the fastest stream, despite providing a new parameter value.

It will also be appreciated by the skilled person that in some embodiments, it may be possible for Parameter A itself to have a monotonic function associated with it. In this case, no additional Parameter B needs to be identified and checked, and Parameter A would be assessed in the same manner as Parameter B, as described above with reference to Figure 11. In particular, the check performed in Step 290 will be performed with respect to Parameter A.

Regardless of the specific parameter that is compared, or the exact mechanism by which the comparison is carried out, once the LA sub-module 52 has identified the best (fastest) data stream at that moment in time, that data stream is then passed to the Quality Assessment (QA) sub-module 54 to determine in Step 260 if it meets certain QA requirements. For example, the QA sub-module 54 may check to make sure that the data stream contains certain expected pieces of information in the correct format and is not missing any vital pieces of information.

In the event that the selected data stream fulfils the requisite QA requirements, the control processor 46 is then programmed to send a command signal to the switching module 42 instructing it to switch to outputting the identified fastest data stream. If the fastest data stream corresponds to that which is currently being output by the switching module 42, it continues to be output to the data processors 4a, 4b, 4c by the switching module 42 as it has been confirmed that that is the fastest stream.

In the event that the selected data stream does not fulfil the QA requirements, no command signal to switch streams is sent by the control processor 46 and the next data stream is analysed in a repeat of the above-described steps 245 to 260.

Many modifications may be made to the above examples without departing from the scope of the present invention as defined in the accompanying claims.

For example, other embodiments of the present invention are envisioned in which the real-time stream analysis module and the switching module are effectively integrated into a combined processor/switch module. There will therefore only be a single input of data streams to the combined processor/switch module, rather than separate inputs to a processor and a switching module. Additionally, the combined processor/switch module may have the capabilities to enhance the output data stream - for example, if a timestamp is found to be missing from the data stream, a local timestamp may be applied by the processor/switch module before the data stream is output to the data processors. This repairing of data in the data stream advantageously makes the subsequent processing of the data stream by the data processors more reliable. As previously described, the format and information payload of the data records in data streams originating from different data providers may vary. This method of repairing of data in the data stream may advantageously be used to ensure that the data in the output data stream is standardised or at least contains all of the necessary information for use by the data processors.

Using the above-described method and system configuration, the data stream selection system of the present embodiment is able to provide the data processors with the best (and fastest) data stream at all times; this stream most accurately reflects the status of the monitored entity at any point in time, so as to ensure that the data processors are constantly able to utilise the most up-to-date information regarding that entity.

It is also possible, in another embodiment, for the throughput of the system to be optimised by an architectural configuration of the data stream selection system. In this embodiment the real-time stream analysis module is arranged to be provided within the switching module such that received data records can be enhanced as a function within the switching module and output therefrom. This configuration would optimise the speed of carrying out switching with a repair function of the data record (mentioned earlier).

Furthermore, as the analysis and switching is carried out by the data stream selection system of the present invention in real-time, there is no need to rely on historical data. This ensures that there are minimal latency or time-lag issues caused by malfunctioning communication channels or data providers, and the system constantly outputs the fastest stream at any given moment.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

## Claims

1. An automated data stream selection system for handling a plurality of data streams received in parallel from multiple data providers, and for selecting and subsequently outputting a preferred one of the plurality of data streams to one or more data stream receivers, wherein each data stream comprises a plurality of data records each including a plurality of parameters about a respective remotely-occurring event, the system comprising:
a real-time stream analysis module arranged to carry out analysis of a newly-received data record of one of the plurality of data streams to determine if its data stream is faster than a presently selected data stream; and
a switching module arranged to output the present selected data stream and to switch to outputting a faster received data stream upon receiving a command signal from the real-time analysis module;
the real-time stream analysis module comprising:
i) a latency analysis module for determining if the newly-received data record indicates the occurrence of a new remotely-occurring event; the latency analysis module including a data store storing a value of a first comparable parameter obtained from the present selected data stream and being arranged to:
a) obtain data from the newly-received data record;
b) determine whether the obtained data includes the first comparable parameter;
c) compare a new value of the first comparable parameter from the newly-received data record with the stored value of the first parameter and determine whether there is a change from the previously stored value to the new value; and
d) determine whether the change indicates a first detection of the occurrence of the new remotely-occurring event using a monotonic characteristic of one of the plurality of parameters of the newly-received data record; and
ii) an assessment module arranged to assess, for a newly-received data record which provides data about the new remotely-occurring event as determined by the latency analysis module, the quality of the data record within the data stream;
wherein the real-time stream analysis module is arranged to generate the command signal if the newly-received data record has comparable data which indicates a first detection of a change of value of the first parameter indicating the occurrence of the new remotely-occurring event and the data records in the data stream are of a quality above a predetermined threshold.

2. The automated data stream selection system of Claim 1, wherein the first parameter has the monotonic characteristic and the latency analysis module is arranged to determine whether the change indicates a first detection of the occurrence of the new remotely-occurring event using the monotonic characteristic of the first parameter of the newly-received data record.

3. The automated data stream selection system of Claim 1, wherein the newly-received data record has a second comparable parameter having the monotonic characteristic, the data store is arranged to store a value of the second comparable parameter obtained from the present selected data stream and the latency analysis module is arranged to:
a. determine whether the obtained data includes the second comparable parameter;
b. compare a new value of the second comparable parameter from the newly-received data record with the stored value of the second parameter and determine whether there is a change from the previously stored value to the new value; and
c. determine whether the change indicates a first detection of the occurrence of the new remotely-occurring event using the monotonic characteristic of the second parameter of the newly-received data record.

4. The automated data stream selection system of any preceding claim, wherein the data store is arranged to store values of a set of first comparable parameters obtained from the present selected data stream and the latency analysis module is arranged to:
a. determine whether the obtained data includes one of the set of first comparable parameters; and
b. compare a new value of the first comparable parameter from the newly-received data record with the stored value of the corresponding first parameter in the set of first parameters and determine whether there is a change from the corresponding previously stored value to the new value.

5. The automated data stream selection system of Claim 3 or Claim 4 as dependent on Claim 3, wherein the real-time stream analysis module is arranged to store a set of second comparable parameters and the latency analysis module is arranged to:
a. determine whether the obtained data includes one of the set of second comparable parameters;
b. compare a new value of the second comparable parameter from the newly-received data record with the stored value of the corresponding second parameter in the set of second parameters and determine whether there is a change from the corresponding previously stored value to the new value.

6. The automated data stream selection system of any preceding claim, wherein the latency analysis module is arranged to apply a threshold in determining whether there has been a change from the previously stored value of the first parameter to the new value.

7. The automated data stream selection system of any preceding claim, wherein the assessment module is arranged to determine if the newly-received data record comprises all of the expected data as compared to a predetermined template of parameters for a data record and to generate the command signal if the expected data for the predetermined parameters is present in the newly received data record.

8. The automated data stream selection system of any preceding claim, wherein the assessment module is arranged to determine if the newly-received data record is missing expected data as compared to a predetermined template of parameters and to enhance the received data record by adding in the missing data in the newly-received data record.

9. The automated data stream selection system of Claim 8, wherein the assessment module comprises a timestamp module for applying a timestamp to the newly-received data record if the newly-received data record does not have a timestamp provided therein.

10. The automated data stream selection system of Claim 8 or 9, wherein the real-time stream analysis module is arranged within the switching module such that newly-received data record can be enhanced as a function within the switching module and output therefrom, to provide faster throughput.

11. The automated data stream selection system of any preceding claim, wherein the real-time stream analysis module further comprises a pre-processing means arranged to convert the data of the newly-received data record into a preferred predetermined data format.

12. The automated data stream selection system of Claim 10, wherein the pre-processing means is arranged to normalise the data provided in the newly-received received data record.

13. The automated data stream selection system of any of Claims 10 to 12, wherein the pre-processing means is arranged to convert the plurality of data records received in parallel into a serial data stream.

14. An automated data stream selection method of handling a plurality of data streams received in parallel from multiple data providers, and of selecting and subsequently outputting a preferred one of the plurality of data streams to one or more data stream receivers, wherein each data stream comprises a plurality of data records each including a plurality of parameters about a respective remotely-occurring event, the method comprising:
carrying out real-time analysis of a newly-received data record of one of the plurality of data streams to determine if its data stream is faster than a presently selected data stream;
outputting the present selected data stream; and
switching to outputting a faster received data stream upon receiving a command signal;
the carrying out real-time analysis step comprising:
i) storing a value of a first comparable parameter obtained from the present selected data stream;
ii) establishing if the newly-received data record indicates the occurrence of a new remotely-occurring event; the establishing step comprising:
a) obtaining data from the newly-received data record;
b) determining whether the obtained data includes the first comparable parameter;
c) comparing a new value of the first comparable parameter from the newly-received data record with the stored value of the first parameter;
d) calculating whether there is a change from the previously stored value to the new value; and
e) concluding whether the change indicates a first detection of the occurrence of the new remotely-occurring event using a monotonic characteristic of one of the plurality of parameters of the newly-received data record; and
iii) assessing, for a newly-received data record which provides data about the new remotely-occurring event as determined by the latency analysis step, the quality of the data record within the data stream;
wherein the carrying out real-time analysis step comprises generating the command signal if the newly-received data record has comparable data which indicates a first detection of a change of value of the first parameter indicating the occurrence of the new remotely-occurring event and the data records in the data stream are of a quality above a predetermined threshold.

## Patentansprüche

1. Ein System zur automatisierten Datenstromauswahl für die Handhabung mehrerer Datenströme, die parallel von mehreren Datenanbietern empfangen wurden, und für die Auswahl und anschließende Ausgabe eines bevorzugten unter den mehreren Datenströmen an mindestens einen Datenstromempfänger, wobei jeder Datenstrom mehrere Datensätze umfasst, die jeweils mehrere Parameter zu einem jeweiligen entfernt auftretenden Ereignis aufweisen, wobei das System Folgendes umfasst:
ein Echtzeit-Stromanalysemodul, das eingerichtet ist, um eine Analyse eines neu empfangenen Datensatzes eines der mehreren Datenströme durchzuführen, um zu bestimmen, ob sein Datenstrom schneller als ein aktuell ausgewählter Datenstrom ist; und
ein Schaltmodul, das eingerichtet ist, um den aktuell ausgewählten Datenstrom auszugeben und um zur Ausgabe eines schnelleren empfangenen Datenstroms zu wechseln, nachdem ein Befehlssignal von dem Echtzeit-Analysemodul empfangen wurde;
wobei das Echtzeit-Stromanalysemodul Folgendes umfasst:
i) ein Latenzanalysemodul zur Bestimmung, ob der neu empfangene Datensatz das Auftreten eines neuen entfernt auftretenden Ereignisses angibt;
wobei das Latenzanalysemodul einen Datenspeicher aufweist, der einen Wert eines ersten vergleichbaren Parameters speichert, der aus dem aktuell ausgewählten Datenstrom erfasst wurde, und wobei es für Folgendes eingerichtet ist:
a) Erfassen von Daten aus dem neu empfangenen Datensatz;
b) Bestimmen, ob die erfassten Daten den ersten vergleichbaren Parameter enthalten;
c) Vergleichen eines neuen Wertes des ersten vergleichbaren Parameters aus dem neu empfangenen Datensatz mit dem gespeicherten Wert des ersten Parameters und Bestimmen, ob eine Änderung von dem zuvor gespeicherten Wert in den neuen Wert vorliegt; und
d) Bestimmen, ob die Änderung eine erste Erkennung des Auftretens des neuen entfernt auftretenden Ereignisses angibt, unter Verwendung einer monotonen Charakteristik eines der mehreren Parameter des neu empfangenen Datensatzes; und
ii) ein Bewertungsmodul, das eingerichtet ist, um die Qualität des Datensatzes innerhalb des Datenstroms für einen neu empfangenen Datensatz zu bewerten, der gemäß der Bestimmung durch das Latenzanalysemodul Daten zu dem neuen entfernt auftretenden Ereignis bereitstellt;
wobei das Echtzeit-Stromanalysemodul eingerichtet ist, um das Befehlssignal zu erzeugen, wenn der neu empfangene Datensatz vergleichbare Daten aufweist, die eine erste Erkennung einer Änderung des Wertes des ersten Parameters angeben, der das Auftreten des neuen entfernt auftretenden Ereignisses angibt, und die Datensätze in dem Datenstrom eine Qualität oberhalb eines zuvor bestimmten Schwellenwerts aufweisen.

2. Das System zur automatisierten Datenstromauswahl nach Anspruch 1, wobei der erste Parameter die monotone Charakteristik aufweist und das Latenzanalysemodul eingerichtet ist, um zu bestimmen, ob die Änderung eine erste Erkennung des Auftretens des neuen entfernt auftretenden Ereignisses angibt, unter Verwendung der monotonen Charakteristik des ersten Parameters des neu empfangenen Datensatzes.

3. Das System zur automatisierten Datenstromauswahl nach Anspruch 1, wobei der neu empfangene Datensatz einen zweiten vergleichbaren Parameter mit der monotonen Charakteristik aufweist, wobei der Datenspeicher eingerichtet ist, um einen Wert des zweiten vergleichbaren Parameters zu speichern, der aus dem aktuell ausgewählten Datenstrom erfasst wurde, und wobei das Latenzanalysemodul für Folgendes eingerichtet ist:
a. Bestimmen, ob die erfassten Daten den zweiten vergleichbaren Parameter enthalten;
b. Vergleichen eines neuen Wertes des zweiten vergleichbaren Parameters aus dem neu empfangenen Datensatz mit dem gespeicherten Wert des zweiten Parameters und Bestimmen, ob eine Änderung von dem zuvor gespeicherten Wert in den neuen Wert vorliegt; und
c. Bestimmen, ob die Änderung eine erste Erkennung des Auftretens des neuen entfernt auftretenden Ereignisses angibt, unter Verwendung der monotonen Charakteristik des zweiten Parameters des neu empfangenen Datensatzes.

4. Das System zur automatisierten Datenstromauswahl nach einem vorhergehenden Anspruch, wobei der Datenspeicher eingerichtet ist, um Werte eines Satzes erster vergleichbarer Parameter zu speichern, die aus dem aktuell ausgewählten Datenstrom erfasst wurden, und wobei das Latenzanalysemodul für Folgendes eingerichtet ist:
a. Bestimmen, ob die erfassten Daten einen aus dem Satz erster vergleichbarer Parameter enthalten; und
b. Vergleichen eines neuen Wertes des ersten vergleichbaren Parameters aus dem neu empfangenen Datensatz mit dem gespeicherten Wert des entsprechenden ersten Parameters in dem Satz erster Parameter und Bestimmen, ob eine Änderung von dem entsprechenden zuvor gespeicherten Wert in den neuen Wert vorliegt.

5. Das System zur automatisierten Datenstromauswahl nach Anspruch 3 oder Anspruch 4 in Abhängigkeit von Anspruch 3, wobei das Echtzeit-Stromanalysemodul eingerichtet ist, um einen Satz zweiter vergleichbarer Parameter zu speichern, und wobei das Latenzanalysemodul für Folgendes eingerichtet ist:
a. Bestimmen, ob die erfassten Daten einen aus dem Satz zweiter vergleichbarer Parameter enthalten;
b. Vergleichen eines neuen Wertes des zweiten vergleichbaren Parameters aus dem neu empfangenen Datensatz mit dem gespeicherten Wert des entsprechenden zweiten Parameters in dem Satz zweiter Parameter und Bestimmen, ob eine Änderung von dem entsprechenden zuvor gespeicherten Wert in den neuen Wert vorliegt.

6. Das System zur automatisierten Datenstromauswahl nach einem vorhergehenden Anspruch, wobei das Latenzanalysemodul eingerichtet ist, um bei der Bestimmung, ob eine Änderung von dem zuvor gespeicherten Wert des ersten Parameters in den neuen Wert vorliegt, einen Schwellenwert anzuwenden.

7. Das System zur automatisierten Datenstromauswahl nach einem vorhergehenden Anspruch, wobei das Bewertungsmodul eingerichtet ist, um zu bestimmen, ob der neu empfangene Datensatz im Vergleich zu einer zuvor bestimmten Vorlage von Parametern für einen Datensatz alle der erwarteten Daten umfasst, und um das Befehlssignal zu erzeugen, wenn die erwarteten Daten für die zuvor bestimmten Parameter in dem neu empfangenen Datensatz vorhanden sind.

8. Das System zur automatisierten Datenstromauswahl nach einem vorhergehenden Anspruch, wobei das Bewertungsmodul eingerichtet ist, um zu bestimmen, ob im Vergleich zu einer zuvor bestimmten Vorlage von Parametern erwartete Daten im neu empfangenen Datensatz fehlen, und um den empfangenen Datensatz zu erweitern, indem die fehlenden Daten zu dem neu empfangenen Datensatz hinzugefügt werden.

9. Das System zur automatisierten Datenstromauswahl nach Anspruch 8, wobei das Bewertungsmodul ein Zeitstempelmodul zur Anwendung eines Zeitstempels auf den neu empfangenen Datensatz umfasst, wenn im neu empfangenen Datensatz kein Zeitstempel bereitgestellt ist.

10. Das System zur automatisierten Datenstromauswahl nach Anspruch 8 oder 9, wobei das Echtzeit-Stromanalysemodul innerhalb des Schaltmoduls angeordnet ist, sodass der neu empfangene Datensatz als Funktion innerhalb des Schaltmoduls und Ausgabe daraus erweitert werden kann, um einen schnelleren Durchsatz bereitzustellen.

11. Das System zur automatisierten Datenstromauswahl nach einem vorhergehenden Anspruch, wobei das Echtzeit-Stromanalysemodul weiter eine Vorverarbeitungseinrichtung umfasst, die eingerichtet ist, um die Daten des neu empfangenen Datensatzes in ein bevorzugtes zuvor bestimmtes Datenformat umzuwandeln.

12. Das System zur automatisierten Datenstromauswahl nach Anspruch 10, wobei die Vorverarbeitungseinrichtung eingerichtet ist, um die in dem neu empfangenen Datensatz bereitgestellten Daten zu normalisieren.

13. Das System zur automatisierten Datenstromauswahl nach einem der Ansprüche 10 bis 12, wobei die Vorverarbeitungseinrichtung eingerichtet ist, um die mehreren parallel empfangenen Datensätze in einen seriellen Datenstrom umzuwandeln.

14. Ein Verfahren zur automatisierten Datenstromauswahl zur Handhabung mehrerer Datenströme, die parallel von mehreren Datenanbietern empfangen wurden, und zur Auswahl und anschließenden Ausgabe eines bevorzugten unter den mehreren Datenströmen an mindestens einen Datenstromempfänger, wobei jeder Datenstrom mehrere Datensätze umfasst, die jeweils mehrere Parameter zu einem jeweiligen entfernt auftretenden Ereignis aufweisen, wobei das Verfahren Folgendes umfasst:
Durchführen einer Echtzeit-Analyse eines neu empfangenen Datensatzes eines der mehreren Datenströme, um zu bestimmen, ob sein Datenstrom schneller als ein aktuell ausgewählter Datenstrom ist;
Ausgeben des aktuell ausgewählten Datenstroms; und
Wechseln zur Ausgabe eines schnelleren empfangenen Datenstroms infolge des Empfangs eines Befehlssignals; wobei der Schritt der Durchführung einer Echtzeit-Analyse Folgendes umfasst:
i) Speichern eines Wertes eines ersten vergleichbaren Parameters, der aus dem aktuell ausgewählten Datenstrom erfasst wurde;
ii) Bestimmen, ob der neu empfangene Datensatz das Auftreten eines neuen entfernt auftretenden Ereignisses angibt; wobei der Bestimmungsschritt Folgendes umfasst:
a) Erfassen von Daten aus dem neu empfangenen Datensatz;
b) Bestimmen, ob die erfassten Daten den ersten vergleichbaren Parameter enthalten;
c) Vergleichen eines neuen Wertes des ersten vergleichbaren Parameters aus dem neu empfangenen Datensatz mit dem gespeicherten Wert des ersten Parameters;
d) Berechnen, ob eine Änderung von dem zuvor gespeicherten Wert in den neuen Wert vorliegt; und
e) Feststellen, ob die Änderung eine erste Erkennung des Auftretens des neuen entfernt auftretenden Ereignisses angibt, unter Verwendung einer monotonen Charakteristik eines der mehreren Parameter des neu empfangenen Datensatzes; und
iii) Bewerten der Qualität des Datensatzes innerhalb des Datenstroms für einen neu empfangenen Datensatz, der Daten zu dem neuen entfernt auftretenden Ereignis gemäß der Bestimmung durch den Latenzanalyseschritt bereitstellt;
wobei die Durchführung des Echtzeit-Analyseschritts umfasst, dass das Befehlssignal erzeugt wird, wenn der neu empfangene Datensatz vergleichbare Daten aufweist, die eine erste Erkennung einer Änderung des Wertes des ersten Parameters angeben, der das Auftreten des neuen entfernt auftretenden Ereignisses angibt, und die Datensätze in dem Datenstrom eine Qualität oberhalb eines zuvor bestimmten Schwellenwerts aufweisen.

## Revendications

1. Un système de sélection de flux de données automatisé destiné à la gestion d'une pluralité de flux de données reçus en parallèle à partir d'une pluralité de fournisseurs de données, et destiné à la sélection et subséquemment à la production en sortie d'un flux de données préféré de la pluralité de flux de données vers un ou plusieurs récepteurs de flux de données, où chaque flux de données comprend une pluralité d'enregistrements de données, chacun d'eux comprenant une pluralité de paramètres relatifs à un événement se produisant à distance respectif, le système comprenant :
un module d'analyse de flux en temps réel agencé de façon à exécuter une analyse d'un enregistrement de données nouvellement reçu d'un flux de données de la pluralité de flux de données de façon à déterminer si son flux de données est plus rapide qu'un flux de données actuellement sélectionné, et
un module de commutation agencé de façon à produire en sortie le flux de données actuellement sélectionné et à commuter vers la production en sortie d'un flux de données reçu plus rapide après la réception d'un signal de commande à partir du module d'analyse en temps réel,
le module d'analyse de flux en temps réel comprenant :
i) un module d'analyse de latence destiné à la détermination si l'enregistrement de données nouvellement reçu indique l'occurrence d'un nouvel événement se produisant à distance, le module d'analyse de latence comprenant un espace mémoire de données conservant en mémoire une valeur d'un premier paramètre comparable obtenu à partir du flux de données actuellement sélectionné et étant agencé de façon à :
a) obtenir des données à partir de l'enregistrement de données nouvellement reçu,
b) déterminer si les données obtenues contiennent le premier paramètre comparable,
c) comparer une nouvelle valeur du premier paramètre comparable provenant de l'enregistrement de données nouvellement reçu à la valeur conservée en mémoire du premier paramètre et déterminer s'il existe une modification entre la valeur antérieurement conservée en mémoire et la nouvelle valeur, et
d) déterminer si la modification indique une première détection de l'occurrence du nouvel événement se produisant à distance au moyen d'une caractéristique monotone d'un paramètre de la pluralité de paramètres de l'enregistrement de données nouvellement reçu, et
ii) un module d'évaluation agencé de façon à évaluer, pour un enregistrement de données nouvellement reçu qui fournit des données relatives au nouvel événement se produisant à distance tel que déterminé par le module d'analyse de latence, la qualité de l'enregistrement de données à l'intérieur du flux de données,
où le module d'analyse de flux en temps réel est agencé de façon à générer le signal de commande si l'enregistrement de données nouvellement reçu possède des données comparables qui indiquent une première détection d'une modification d'une valeur du premier paramètre indiquant l'occurrence du nouvel événement se produisant à distance, et les enregistrements de données dans le flux de données sont d'une qualité supérieure à un seuil prédéterminé.

2. Le système de sélection de flux de données automatisé selon la Revendication 1, où le premier paramètre possède la caractéristique monotone et le module d'analyse de latence est agencé de façon à déterminer si la modification indique une première détection de l'occurrence du nouvel événement se produisant à distance au moyen de la caractéristique monotone du premier paramètre de l'enregistrement de données nouvellement reçu.

3. Le système de sélection de flux de données automatisé selon la Revendication 1, où l'enregistrement de données nouvellement reçu possède un deuxième paramètre comparable possédant la caractéristique monotone, l'espace mémoire de données est agencé de façon à conserver en mémoire une valeur du deuxième paramètre comparable obtenu à partir du flux de données actuellement sélectionné et le module d'analyse de latence est agencé de façon à :
a. déterminer si les données obtenues contiennent le deuxième paramètre comparable,
b. comparer une nouvelle valeur du deuxième paramètre comparable provenant de l'enregistrement de données nouvellement reçu à la valeur conservée en mémoire du deuxième paramètre et déterminer s'il existe une modification entre la valeur antérieurement conservée en mémoire et la nouvelle valeur, et
c. déterminer si la modification indique une première détection de l'occurrence du nouvel événement se produisant à distance au moyen de la caractéristique monotone du deuxième paramètre de l'enregistrement de données nouvellement reçu.

4. Le système de sélection de flux de données automatisé selon l'une quelconque des Revendications précédentes, où l'espace mémoire de données est agencé de façon à conserver en mémoire des valeurs d'un ensemble de premiers paramètres comparables obtenus à partir du flux de données actuellement sélectionné, et le module d'analyse de latence est agencé de façon à :
a. déterminer si les données obtenues contiennent un paramètre de l'ensemble de premiers paramètres comparables, et
b. comparer une nouvelle valeur du premier paramètre comparable provenant de l'enregistrement de données nouvellement reçu à la valeur conservée en mémoire du premier paramètre correspondant dans l'ensemble de premiers paramètres et déterminer s'il existe une modification entre la valeur antérieurement conservée en mémoire correspondante et la nouvelle valeur.

5. Le système de sélection de flux de données automatisé selon la Revendication 3, ou 4 lorsqu'elle dépend de la Revendication 3, où le module d'analyse de flux en temps réel est agencé de façon à conserver en mémoire un ensemble de deuxièmes paramètres comparables et le module d'analyse de latence est agencé de façon à :
a. déterminer si les données obtenues contiennent un paramètre de l'ensemble de deuxièmes paramètres comparables,
b. comparer une nouvelle valeur du deuxième paramètre comparable provenant de l'enregistrement de données nouvellement reçu à la valeur conservée en mémoire du deuxième paramètre correspondant dans l'ensemble de deuxièmes paramètres et déterminer s'il existe une modification entre la valeur antérieurement conservée en mémoire correspondante et la nouvelle valeur.

6. Le système de sélection de flux de données automatisé selon l'une quelconque des Revendications précédentes, où le module d'analyse de latence est agencé de façon à appliquer un seuil dans la détermination s'il y a eu une modification entre la valeur antérieurement conservée en mémoire du premier paramètre et la nouvelle valeur.

7. Le système de sélection de flux de données automatisé selon l'une quelconque des Revendications précédentes, où le module d'évaluation est agencé de façon à déterminer si l'enregistrement de données nouvellement reçu comprend la totalité des données attendues en comparaison d'un modèle de paramètres prédéterminé destiné à un enregistrement de données et à générer le signal de commande si les données attendues destinées aux paramètres prédéterminés sont présentes dans l'enregistrement de données nouvellement reçu.

8. Le système de sélection de flux de données automatisé selon l'une quelconque des Revendications précédentes, où le module d'évaluation est agencé de façon à déterminer si dans l'enregistrement de données nouvellement reçu des données attendues sont manquantes en comparaison d'un modèle de paramètres prédéterminé et à améliorer l'enregistrement de données reçu par l'ajout des données manquantes à l'enregistrement de données nouvellement reçu.

9. Le système de sélection de flux de données automatisé selon la Revendication 8, où le module d'évaluation comprend un module de timbre à date destiné à l'application d'un timbre à date à l'enregistrement de données nouvellement reçu si l'enregistrement de données nouvellement reçu ne possède pas un timbre à date fourni dans celui-ci.

10. Le système de sélection de flux de données automatisé selon la Revendication 8 ou 9, où le module d'analyse de flux en temps réel est agencé à l'intérieur du module de commutation de sorte qu'un enregistrement de données nouvellement reçu puisse être amélioré sous la forme d'une fonction à l'intérieur du module de commutation et produit en sortie à partir de celui-ci de façon à fournir un débit plus rapide.

11. Le système de sélection de flux de données automatisé selon l'une quelconque des Revendications précédentes, où le module d'analyse de flux en temps réel comprend en outre un moyen de prétraitement agencé de façon à convertir les données de l'enregistrement de données nouvellement reçu en un format de données prédéterminé préféré.

12. Le système de sélection de flux de données automatisé selon la Revendication 10, où le moyen de prétraitement est agencé de façon à normaliser les données fournies dans l'enregistrement de données nouvellement reçu.

13. Le système de sélection de flux de données automatisé selon l'une quelconque des Revendications 10 à 12, où le moyen de prétraitement est agencé de façon à convertir la pluralité d'enregistrements de données reçus en parallèle en un flux de données en série.

14. Un procédé de sélection de flux de données automatisé destiné à la gestion d'une pluralité de flux de données reçus en parallèle à partir d'une pluralité de fournisseurs de données, et à la sélection et subséquemment à la production en sortie d'un flux de données préféré de la pluralité de flux de données vers un ou plusieurs récepteurs de flux de données, où chaque flux de données comprend une pluralité d'enregistrements de données, chacun d'eux comprenant une pluralité de paramètres relatifs à un événement se produisant à distance respectif, le procédé comprenant :
l'exécution d'une analyse en temps réel d'un enregistrement de données nouvellement reçu d'un flux de données de la pluralité de flux de données de façon à déterminer si son flux de données est plus rapide qu'un flux de données actuellement sélectionné,
la production en sortie du flux de données actuellement sélectionné, et
la commutation vers la production en sortie d'un flux de données reçu plus rapide après la réception d'un signal de commande, l'opération d'exécution d'une analyse en temps réel comprenant :
i) la conservation en mémoire d'une valeur d'un premier paramètre comparable obtenu à partir du flux de données actuellement sélectionné,
ii) l'établissement si l'enregistrement de données nouvellement reçu indique l'occurrence d'un nouvel événement se produisant à distance, l'opération d'établissement comprenant :
a) l'obtention de données à partir de l'enregistrement de données nouvellement reçu,
b) la détermination si les données obtenues contiennent le premier paramètre comparable,
c) la comparaison d'une nouvelle valeur du premier paramètre comparable provenant de l'enregistrement de données nouvellement reçu à la valeur conservée en mémoire du premier paramètre,
d) le calcul s'il existe une modification entre la valeur antérieurement conservée en mémoire et la nouvelle valeur, et
e) la conclusion si la modification indique une première détection de l'occurrence du nouvel événement se produisant à distance au moyen d'une caractéristique monotone d'un paramètre de la pluralité de paramètres de l'enregistrement de données nouvellement reçu, et
iii) l'évaluation, pour un enregistrement de données nouvellement reçu qui fournit des données relatives au nouvel événement se produisant à distance tel que déterminé par l'opération d'analyse de latence, de la qualité de l'enregistrement de données à l'intérieur du flux de données,
où l'opération d'exécution d'une analyse en temps réel comprend la génération du signal de commande si l'enregistrement de données nouvellement reçu possède des données comparables qui indiquent une première détection d'une modification de valeur du premier paramètre indiquant l'occurrence du nouvel événement se produisant à distance et que les enregistrements de données dans le flux de données sont d'une qualité supérieure à un seuil prédéterminé.
